(19) Europäisches Patentamt
European Patent Office
Office européen des brevets

(11) **EP 1 900 966 A1**

(12) **EUROPEAN PATENT APPLICATION**
published in accordance with Art. 153(4) EPC

(43) Date of publication:
**19.03.2008 Bulletin 2008/12**

(51) Int Cl.:
***F16G 5/18*** *(2006.01)*

(21) Application number: **06767687.4**

(86) International application number:
**PCT/JP2006/313079**

(22) Date of filing: **30.06.2006**

(87) International publication number:
**WO 2007/004548 (11.01.2007 Gazette 2007/02)**

(84) Designated Contracting States:
**DE FR GB IT**

(30) Priority: **30.06.2005 JP 2005191937**

(71) Applicant: **JTEKT Corporation**
**Osaka-shi**
**Osaka 542-8502 (JP)**

(72) Inventors:
• **ROTHENBUHLER, Yves**
**JTEKT Corportaion**
**Osaka-shi, Osaka 542-8502 (JP)**

• **KAMAMOTO, Shigeo**
**JTEKT Corporation**
**Osaka-shi, Osaka 542-8502 (JP)**

(74) Representative: **Steil, Christian et al**
**Witte, Weller & Partner**
**Postfach 10 54 62**
**70047 Stuttgart (DE)**

(54) **POWER TRANSMISSION CHAIN AND POWER TRANSMISSION DEVICE**

(57)    A power transmission chain (1) includes connection members (3; 3A; 4) flexibly connecting corresponding links (2) of a plurality of link rows (52; 52; 53). The connection members (3; 3A; 4) include a first power transmission member (3; 3A) and a second power transmission member (4). The chain (1) includes a module (40; 40A) as a unit element. A moving locus of a contact part (T1; T1A) between the corresponding first and second power transmission members conjunction with flexure between the links (2) defines prescribed curve. The positions of a gravity center (GC; GCA) of the contact part (T1; T1A) and the module (40; 40A) in the chain straight area are space apart by a prescribed distance from each other with respect to an orthogonal direction (V) perpendicular to both a chain advancing direction (X) and a chain width direction (W). The prescribed distance is not more than 20% of overall length of the module (40) with respect to the orthogonal direction (V).

FIG. 6

EP 1 900 966 A1

## Description

### Technical Field

The present invention relates to a power transmission chain and a power transmission apparatus comprising the same.

### Background Art

An endless power transmission chain for use in the power transmission apparatus such as an automotive continuously variable transmission (CVT) of a pulley type includes a plurality of links arranged in a chain advancing direction and coupled adjoining links in the chain advancing direction by means of pins and inter-pieces rollably movable relative to each other (see, for example, Patent Document 1).
Each of the above links is formed with a pair of through-holes. The pin is fixedly press-inserted and the inter-piece is loose-fitted in one of the through-holes. In the other through-hole, the pin is loose-fitted and the inter-piece is fixedly press-inserted. In this manner, the pins are substantially restrained from rotating relative to the pulley when the pins contact with the pulley. Thus, friction loss is reduced to increase power transmission efficiency.
The above pin is configured such that a cross-sectional profile of a portion in contact with the inter-piece is defined in an involute curve. This prevents the pin and the corresponding links from swinging in a radial direction of the pulley before or after the pin is meshed with the pulley. This obviates the occurrence of minute vibrations similar to string vibrations in the power transmission chain, whereby noise reduction is accomplished.
Patent Document 1: Japanese Unexamined Patent Publication No. 8-312725

### Disclosure of the Invention

### Problems to Be Solved by the Invention

In an area where the above power transmission chain is stretched straight (straight area), a contact point between the pin and the inter-piece is shifted (offset) toward an inner end of the inter-piece with respect to a chain radial direction when the chain is flexed.
As a result, an unwanted moment (load) occurs within the straight area of the power transmission chain under tension. Because of the unwanted moment occurred within the straight area of the power transmission chain, the power transmission chain is increased in inertia at transition from the straight area to a flex area. This causes vibrations in the power transmission chain and may lead to noises.
The occurrence of the unwanted moment may sometimes lead to the increase in stress particularly at a press-in engagement part between the pin and the inter-piece corresponding to the link.
It is an object of the invention to provide a power transmission chain which can improve in practical durability by reducing the unwanted moment and can reduce noise and increase power transmission efficiency, and a power transmission apparatus comprising the same.

### Means for Solving the Problems

In accordance with a preferred embodiment of the invention, the above object is accomplished in a power transmission chain comprising: a plurality of link rows, each including a plurality of links arranged in a chain width direction perpendicular to a chain advancing direction, and arranged in a chain advancing direction; and a plurality of connection members for flexibly connecting corresponding links of the link rows. The connection members each include first and second power transmission members in paired relation. The first power transmission members each include a pair of end portions, each of which includes a power transmission portion for engaging with the pulley. Each link includes first and second through-holes arranged in the chain advancing direction. A corresponding first power transmission member is fitted in one of the first and second through-holes of each link so as to be restrained from relative movement, whereas a corresponding second power transmission member is fitted in the other through-hole so as to be restrained from relative movement. The first and second power transmission members in paired relation each have confronting portions opposing each other. The confronting portions in opposing relation are in contact with each other at a contact part displaced in conjunction with flexure between the links in a contact state including at least one of rolling contact and sliding contact. A moving locus of the contact part associated with the flexure between the links defines a prescribed curve. The prescribed curve includes a change-rate increasing area where a change rate of displacement amount of the contact part on the prescribed curve is increased according to an increase of flexion angle between the links. A module as a unit element of the power transmission chain is formed using the respective links of one link row, and the corresponding first and second power transmission members restrained from moving relative to the individual links. Positions of the contact part in a straight area and of a gravity center of the module are spaced apart by a predetermined distance with respect to an orthogonal direction perpendicular to both the chain advancing direction and the chain width direction. The predetermined distance is not more than 20% of overall length of the module with respect to the orthogonal direction.

According to the embodiment, high power transmission efficiency may be achieved by reducing the friction loss between the first power transmission member and the pulley when the first power transmission member contacts with the pulley to transmit powers. Further, the occurrence of minute vibrations similar to string vibrations in the chain may be suppressed by providing the change-rate increasing area, whereby the noise reduction may be achieved. Since the gravity center of the module and the contact part in the straight area are closely adjacent with respect to the orthogonal direction, the unwanted moment (load) may be prevented from occurring within the straight area when, for example, the power transmission chain is tensioned as wound about the pulleys. In this manner, the power transmission chain may be increased in the practical durability. Since the occurrence of the unwanted moment is suppressed, the power transmission chain may be reduced in inertia at transition from the straight area to the flex area. As a result, the vibrations of the power transmission chain may be suppressed so that the noises may be reduced further.

It is preferred that the prescribed curve includes an involute curve. In this case, the first power transmission member and the corresponding links may be favorably prevented from swinging in the radial direction of the pulley before or after the first power transmission member is engaged with the pulley. As a result, the noises may be even further reduced.

It is preferred that the contact part in the straight area is disposed in a direction inwardly of the flexure relative to the gravity center of the module when the chain is flexed. In this case, the maximum value of the displacement amount of the contact part associated with the flexure between the links may be increased. This results in an increased maximum value of flexion angle between the links (allowable flexion angle).

It is preferred that the thickness of the second power transmission member with respect to the chain advancing direction is smaller than that of the first power transmission member with respect to the chain advancing direction. In this case, the power transmission chain may be downsized by way of the slimming of the second power transmission member. It is noted here that a contact area between the second power transmission member and the link is decreased by reducing the thickness of the second power transmission member. Hence, pressure (surface pressure) exerted on the link from the second power transmission member is increased. However, the load on the link is reduced by suppressing the occurrence of the unwanted moment. Therefore, the thickness of the second power transmission member may be adequately reduced without impairing the practical durability.

In accordance with a preferred embodiment of the invention, a power transmission apparatus is provided which comprises first and second pulleys each including a pair of conical sheave surfaces in opposing relation, wherein power is transmitted between the pair of pulleys via the above power transmission chain. In this case, the power transmission apparatus excellent in power transmission efficiency, low noise performance and practical durability may be provided.

**Brief Description of the Drawings**

FIG.1 is a perspective view schematically showing a construction of an essential part of a chain continuously variable transmission as a power transmission apparatus comprising a power transmission chain according to one embodiment of the invention;

FIG.2 is an enlarged fragmentary sectional view of a drive pulley (driven pulley) and the chain shown in FIG.1;

FIG.3 is a sectional view of an essential part of the chain;

FIG.4 is a sectional view taken on the line II-II in FIG. 3, showing a straight area of the chain;

FIG. 5 is a side view of a flex area of the chain;

FIG.6 is a sectional view of a module;

FIG.7 is a sectional view showing an essential part of another embodiment of the invention; and

FIG.8 is a graph showing test results of Examples 1 to 3 and Comparative Example 1.

**Best Modes for Carrying Out the Invention**

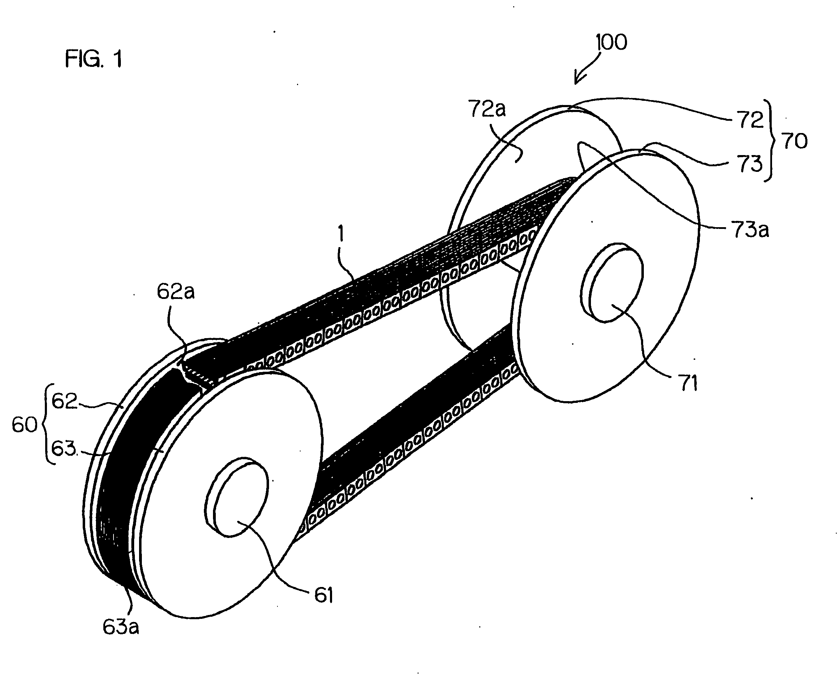

A preferred embodiment of the invention will be described with reference to the accompanying drawings. FIG.1 is a perspective view schematically showing a construction of an essential part of a chain continuously variable transmission (hereinafter referred to simply as continuously variable transmission) as a power transmission apparatus comprising a power transmission chain according to one embodiment of the invention. Referring to FIG. 1, a continuously variable transmission 100 is mounted in a vehicle such as an automobile and comprises: a drive pulley 60 as a first pulley formed of a metal (structural steel or the like); a driven pulley 70 as a second pulley formed of a metal (structural steel or the like); and an endless power transmission chain 1 (hereinafter referred to simply as "chain") wound between both these pulleys 60, 70. A part of the chain 1 in FIG. 1 is shown in section to facilitate understandings.

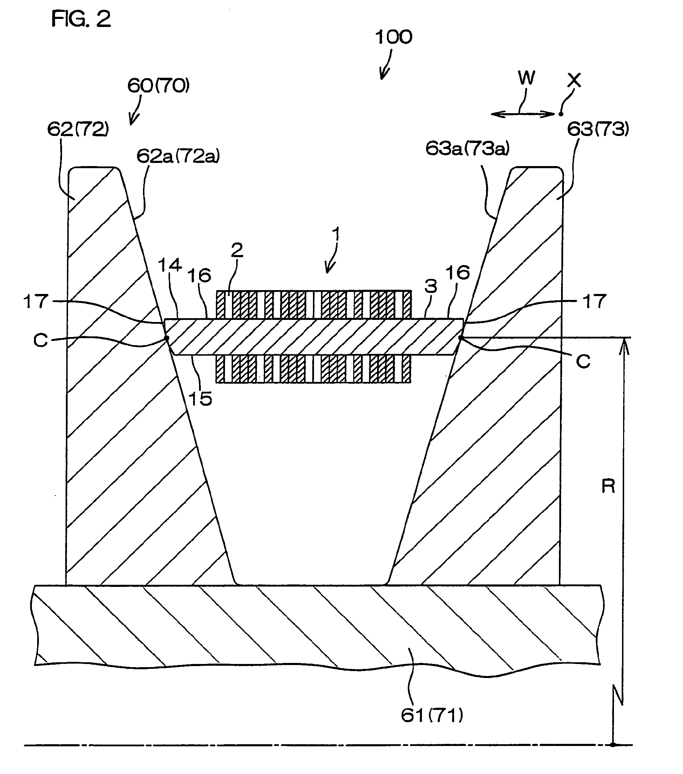

FIG.2 is an enlarged fragmentary sectional view of the drive pulley 60 (driven pulley 70) and the chain 1. Referring to FIG. 1 and FIG.2, the drive pulley 60 is unitarily rotatably mounted to an input shaft 61 connected to a drive source of the vehicle in a power transmittable manner. The drive pulley comprises a stationary sheave 62 and a movable sheave 63. The stationary sheave 62 and the movable sheave 63 include sheave surfaces 62a, 63a which are paired and oppose each other. The sheave surfaces 62a, 63a each include a conical slant face. These sheave surfaces 62a, 63a define a groove therebetween, by which the chain 1 is clamped and held with high pressure.

The movable sheave 63 is connected with a hydraulic actuator (not shown) for varying the groove width. At shift transmission, the movable sheave 63 is moved in an axial direction of the input shaft 61 (transverse directions as seen in FIG.2) so as to vary the groove width. This moves the chain 1 in a radial direction (orthogonal directions as seen in FIG.2) of the input shaft 61, whereby effective radius R of the pulley 60 may be varied with respect to the chain 1.

On the other hand, the driven pulley 70 is unitarily rotatably mounted to an output shaft 71 connected to driving wheels (not shown) in a power transmittable manner to the wheels. Similarly to the drive pulley 60, the driven pulley comprises a stationary sheave 73 and a movable sheave 72 including sheave surfaces 73a, 72a which are paired and oppose each other so as to define a groove therebetween, by which the chain 1 is clamped and held with high pressure. Similarly to the movable sheave 63 of the drive pulley 60, the movable sheave 72 of the driven pulley 70 is connected with a hydraulic actuator (not shown). At shift transmission, the movable sheave 72 is moved to vary the groove width. This moves the chain 1, whereby effective radius R of the pulley 70 may be varied with respect to the chain 1.

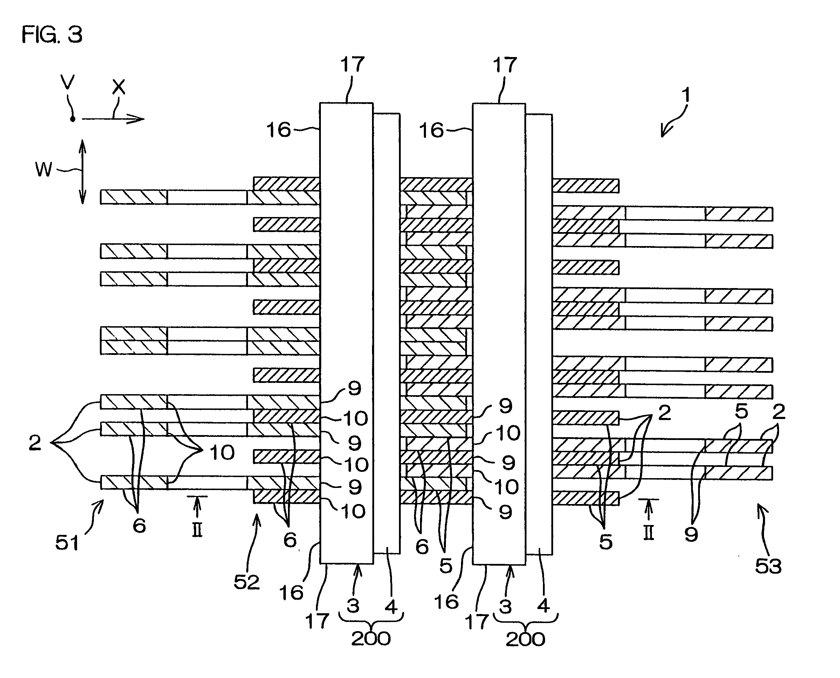

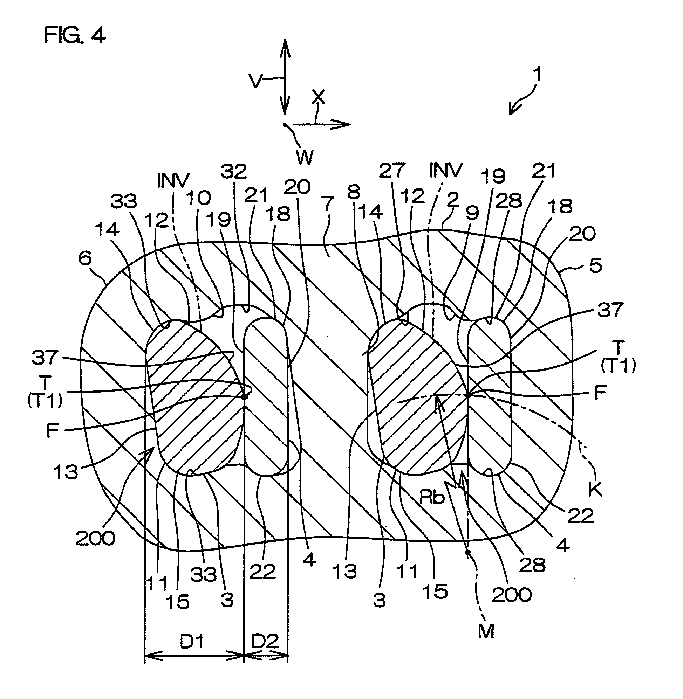

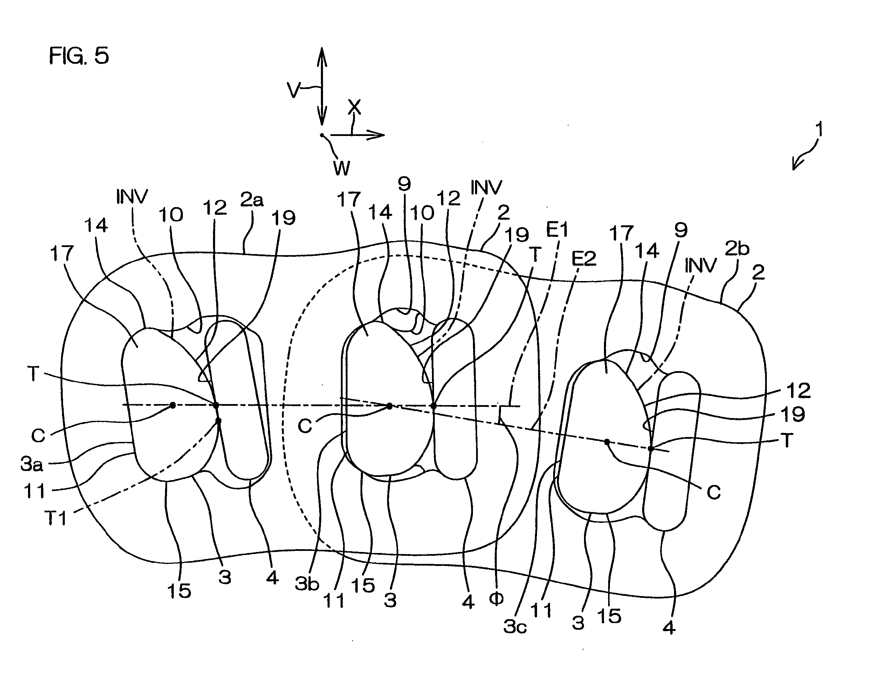

FIG.3 is a sectional view of an essential part of the chain 1. FIG.4 is a sectional view taken on the line II-II in FIG.3, showing a straight area of the chain 1. FIG.5 is a side view of a flex area of the chain 1.

Hereinafter, the following description with reference to FIG.4 is made on the basis of the straight area of the chain 1, whereas the following description with reference to FIG.5 is made on the basis of the flex area of the chain 1.

Referring to FIG.3 and FIG.4, the chain 1 comprises: a plurality of links 2; and a plurality of connection members 200 for flexibly interconnecting these links 2.

Each of the connection members 200 includes: a first pin 3 as a first power transmission member; and a second pin 4 as a second power transmission member paired with the first pin. The first pin 3 is adapted to be in contact with the second pin 4 as its counterpart in a contact state at least one of rolling contact and sliding contact therewith in conjunction with flexure between the links 2.

Hereinafter, a direction parallel to the advancing direction of the chain 1 will be referred to as "chain advancing direction X"; a direction perpendicular to the chain advancing direction X and parallel to a longitudinal direction of the first and second pins 3, 4 will be referred to as "chain width direction W"; and a direction perpendicular to both the chain advancing direction X and the chain width direction W will be referred to as "orthogonal direction V".

Each link 2 is formed in a plate, the long side of which extends in the chain advancing direction X and the short side of which extends in the orthogonal direction V. The link 2 includes: a front end portion 5 and a rear end portion 6 constituting a pair of tandem end portions with respect to the chain advancing direction X; and an intermediate portion 7 disposed between the front end portion 5 and the rear end portion 6.

The front end portion 5 and the rear end portion 6 are formed with a front through-hole 9 as a first through-hole and a rear through-hole 10 as a second through-hole, respectively. The intermediate portion 7 includes a pillar portion 8 to divide between the front through-hole 9 and the rear through-hole 10. The circumference of each link 2 is formed in a smooth curve, having a configuration hardly produces stress concentration.

First to third link rows 51 to 53 constituting a plurality of link rows are formed using the links 2. The first link row 51, the second link row 52 and the third link row 53 each include a plurality of links 2 arranged in the chain width direction W.

The first to third link rows 51 to 53 each include, for example, eight links 2. That is, the respective link rows 51 to 53 include the same number of links 2. The number of links 2 included in each of the link rows 51 to 53 may be more than eight, or less than eight. Alternatively, the numbers of links 2 included in the individual link rows 51 to 53 may be different.

In each of the first to third link rows 51 to 53, the links 2 in the same link row are aligned with respect to the chain advancing direction X. The first to third link rows 51 to 53 are arranged along the chain advancing direction X. The links 2 of the first to third link rows 51 to 53 are flexibly connected with corresponding links 2 of the first to third rows 51 to 53 individually using corresponding connection members 200.

Specifically, the front through-holes 9 of the links 2 of the first link row 51 and the rear through-holes 10 of the links 2 of the second link row 52 correspond each other as aligned with respect to the chain width direction W. The links 2 of the first and second link rows 51, 52 are connected by means of the connection member 200 inserted through these through-holes 9, 10 flexibly in the chain advancing direction X.

Similarly, the front through-holes 9 of the links 2 of the second link row 52 and the rear through-holes 10 of the links 2 of the third link row 53 correspond each other as aligned with respect to the chain width direction W. The links 2 of the second and third link rows 52, 53 are connected by means of the connection member 200, inserted through these through-holes 9, 10 flexibly in the chain advancing direction X.

While FIG.3 illustrates only each one of the first to third link rows 51 to 53, the first to third link rows 51 to 53 are arranged along the chain advancing direction X in a repetitive fashion. The links 2 of respective pairs of link rows adjoining each other in the chain advancing direction X are sequentially interconnected by means of the corresponding connection members 200, whereby the chain 1 of the endless loop shape is formed.

Referring to FIG.3 and FIG.4, the first pin 3 is an elongate (plate-shaped) member extending in the chain width direction W. A circumferential surface 11 of the first pin 3 extends in parallel to the chain width direction W. The circumferential surface 11 is formed in a smooth surface, which includes: a front portion 12 as a confronting portion facing forwardly with respect to the chain advancing direction X; a rear portion 13 as a back portion (flat face) facing rearwardly with respect to the chain advancing direction X; and one end portion 14 and the other end portion 15 as a pair of end portions opposing each other in the orthogonal direction V.

The front portion 12 confronts a rear portion 19 (to be described hereinlater) of the second pin 4 as the counterpart. The front portion 12 is in rolling contact and/or sliding contact with the rear portion 19 at a contact part T (contact point as viewed in the chain width direction W).

The one end portion 14 constitutes an end portion on the chain-outside (one side in the orthogonal direction V) of the circumferential surface 11 of the first pin 3. The one end portion is formed in a curved surface protruded toward the chain-outside.

The other end portion 15 constitutes an end portion on the chain-inside (the other side in the orthogonal direction V) of the circumferential surface 11 of the first pin 3. The other end portion is formed in a curved surface protruded toward the chain-inside.

Hereinafter, the chain-inside means a side from the one end portion 14 toward the other end portion 15 with respect to the orthogonal direction V, whereas the chain-outside means a side from the other end portion 15 toward the one end portion 14 with respect to the orthogonal direction V.

A pair of end portions 16 with respect to the longitudinal direction of the first pin 3 (chain width direction W) projects individually in the chain width direction W from the links 2 disposed at a pair of ends in the chain width direction W. These end portions 16 are each provided with an end face 17 which serves as a power transmission portion for engagement with the pulley.

Referring to FIG.2 and FIG.5, the end faces 17 are provided for frictional contact (engagement) with the corresponding sheave surfaces 62a, 63a, 72a, 73a of the respective pulleys 60, 70.

The first pin 3 is clamped between the corresponding sheave surfaces 62a, 63a, 72a, 73a, whereby power is transmitted between the first pin 3 and the respective pulleys 60, 70. The first pin 3 is formed of a high-strength anti-wear material such as a bearing steel (SUJ2) because the end faces 17 thereof directly contribute to the power transmission.

As viewed in the chain width direction W, the end face 17, with a contact center point C coincident with the centroid thereof, is designed such that at least a partial area thereof contacts with the corresponding sheave surface 62a, 63a, 72a, 73a of the respective pulleys 60, 70. The contact center point C may be deviated from the centroid of the end face 17.

Returning to FIG.3 and FIG.4, the second pin 4 (also referred to as strip or inter-piece) is an elongate (plate-shaped) member which is formed of the same material as that of the first pin 3 and extends in the chain width direction W.

The second pin 4 is formed shorter than the first pin 3 so that a pair of longitudinally end portions thereof may not contact with the sheave surfaces of the respective pulleys. The second pin is disposed in front of the first pin 3 as its counterpart with respect to the chain advancing direction X.

In the straight area of the chain 1, the thickness D2 of the second pin 4 with respect to the chain advancing direction X is smaller than the thickness D1 of the first pin 3 with respect to the chain advancing direction X (D2<D1).

A circumferential surface 18 of the second pin 4 extends in the chain width direction W. The circumferential surface 18 is formed in a smooth surface, which includes: the rear portion 19 as a confronting portion facing rearwardly with respect to the chain advancing direction X; a front portion 20 facing forwardly with respect to the chain advancing direction X; and one end portion 21 and the other end portion 22 as a pair of end portions in the orthogonal direction V. The rear portion 19 is formed in a flat plane perpendicular to the chain advancing direction X. As described above, the rear portion 19 confronts the front portion 12 of the first pin 3 in paired relation.

The front portion 20 is formed in a flat plane substantially parallel to the rear portion 19.

The one end portion 21 constitutes an end portion on the chain-outside of the circumferential surface 18 of the second pin 4. The one end portion is formed in a curved surface protruded toward the chain-outside.

The other end portion 22 constitutes an end portion on the chain-inside of the circumferential surface 18 of the second pin 4. The other end portion is formed in a curved surface protruded toward the chain-inside.

The chain 1 is a so-called press-fit chain. Specifically, the first pin 3 is loose-fitted in the front through-hole 9 of each link 2 to be relatively movable, and the second pin 4, the counterpart of the first pin 3, is fixedly press-inserted therethrough so as to be restrained from moving relative to the first pin. On the other hand, the first pin 3 is fixedly press-inserted through the rear through-hole 10 of each link 2 so as to be restrained from moving relative to the second pin, and the second pin 4, the counterpart of the first pin 3, to be loose-fitted therein to be relatively movable.

The second pin 4 is fixedly press-inserted through the front through-hole 9 of the link 2 as follows. That is, a circumferential edge 27 of the front through-hole 9 of the link 2 includes a press-fitted portion 28 in which the second pin 4 is fixedly press-inserted.

The press-fitted portion 28 is formed in a shape corresponding to the shape of the one end portion 21 and the other end portion 22 of the second pin 4 so as to receive the one end portion 21 and the other end portion 22 of the corresponding second pin 4. Of the press-fitted portion 28, a part which receives the one end portion 21 of the second pin 4 is subjected to a pressing force toward the chain-outside by the second pin 4. Of the press-fitted portion 28, a part which receives the other end portion 22 of the second pin 4 is subjected to a pressing force toward the chain-inside by the second pin 4.

The first pin 3 is fixedly press-inserted through the rear through-hole 10 of the link 2 as follows. That is, a circumferential edge 32 of the rear through-hole 10 of the link 2 includes a press-fitted portion 33 in which the first pin 3 is fixedly press-inserted.

The press-fitted portion 33 is formed in a shape corresponding to the shape of the one end portion 14 and the other end portion 15 of the first pin 3 so as to receive the one end portion 14 and the other end portion 15 of the corresponding first pin 3. Of the press-fitted portion 33, a part which receives the one end portion 14 of the first pin 3 is subjected to a pressing force toward the chain-outside by the first pin 3. Of the press-fitted portion 28, a part which receives the other end portion 15 of the first pin 3 is subjected to a pressing force toward the chain-inside by the first pin 3.

Referring to FIG.5, due to the above construction, the front portion 12 of the first pin 3 and the rear portion 19 of the counterpart second pin 4 make rolling contact and/or sliding contact with each other in conjunction with flexure between the respective pair of links 2 adjoining each other in the chain advancing direction X. As the flexion amount (flexion angle) increases, the contact part T is displaced toward the chain-outside.

In the flex area of the chain 1, the adjoining links 2 in the chain advancing direction X is relatively flexed to each other with forming a given flexion angle $\varphi$ relative to each other. The flexion angle $\varphi$ is defined as the angle formed between a first plane E1 and a second plane E2.

The first plane E1 is defined as a plane which includes respective contact center points C of first pins 3a, 3b inserted through the respective through-holes 9, 10 of one link 2a in the flex area and which is parallel to the chain width direction W.

The second plane E2 is defined as a plane which includes respective contact center points C of first pins 3b, 3c inserted through the respective through-holes 9, 10 of another link 2b adjoining the above link 2a in the chain advancing direction X and which is parallel to the chain width direction W. The range of design flexion angle $\varphi$ is defined from 0° to 30°, for example. An allowable flexion angle $\varphi$ max is defined as 30°.

The chain 1 is of a so-called involute type.

The chain is adapted such that the moving locus of the contact part T associated with the flexion between the adjoining links 2, as viewed in the chain width direction W, defines an involute curve INV as a prescribed curve based on the corresponding first pin 3.

Referring to FIG.4, the front portion 12 of the first pin 3 includes a curved portion 37, which contacts with the rear portion 19 of the counterpart second pin 4 at the contact part T.

The curved portion 37 includes an involute curve coincident with the involute curve INV, as viewed in the chain width direction W. A chain-inside end of the curved portion 37 is defined as the origin F (as viewed in the chain width direction W) of the involute curve of the curved portion 37. The position of the origin F coincides with the position of a contact part T1 or the contact part T of the first pin 3 in the straight area of the chain 1.

The position of the origin F does not necessarily coincide with the position of the contact part T1.

A base circle K of the involute curve of the curved portion 37 as viewed in the chain width direction W is a circle having a center M and a radius Rb (the radius of base circle: 50mm for example).

On a plane perpendicular to the chain advancing direction X and including the contact part T1 of the first pin 3, the center M is located at place toward the chain-inside from the contact part T1. The base circle K intersects with the origin F.

The cross-sectional profile of the curved portion 37 is defined as the involute curve, so that the curvature radius of the curved portion 37 is progressively increased from the chain-inside toward the chain-outside. Thus, the curved portion 37 is increased in the curvature radius at the contact part T according to the increase in the flexion angle. Hence, the change rate of displacement amount of the contact part T on the involute curve of the curved portion 37 is increased. That is, the involute curve INV contains a change-rate increasing area entirely where the change rate of displacement amount of the contact part T on the involute curve INV is increased according to the increase of the flexion angle $\varphi$ between the links 2 (see FIG.5).

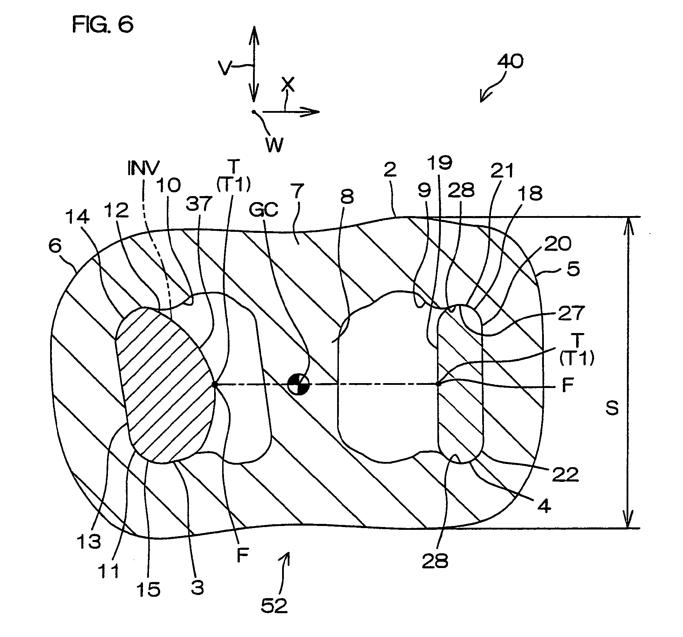

FIG.6 is a sectional view of a module 40. Referring to FIG.4 and FIG.6, the feature of the embodiment is as follows. The chain 1 comprises a module 40 as a unit element of the chain 1. With respect to the orthogonal direction V, the position of the gravity center GC of the module 40 is closely adjacent to the position of the contact part T1, whereby an unwanted internal moment is prevented from occurring in the straight area of the chain 1.

The module 40 includes: the individual links 2 (only one link 2 is shown in FIG.6) of one link row (for example, the second link row 52); the corresponding first pin 3 fixedly press-inserted through the rear through-holes 10 of the links 2; and the corresponding second pin 4 fixedly press-inserted through the front through-holes 9 of the links 2. The chain 1 may be described as being formed by arranging the plural modules 40 in the chain advancing direction X and connecting the adjoining modules 40 with one another.

The position of the gravity centers of the respective elements of the module 40 are substantially aligned with respect to the orthogonal direction V. Specifically, the respective gravity centers of the links 2, the first pin 3 and the second pin 4 are substantially aligned to one another with respect to the orthogonal direction V. The overall length of the first pin 3 with respect to the orthogonal direction V is substantially equal to the overall length of the second pin 4 with respect to the orthogonal direction V. In the straight area, the first pin 3 and the second pin 4 in paired relation are aligned with each other with respect to the orthogonal direction V so that either one of these pins may not project in the orthogonal direction V.

As viewed in the chain width direction W, the position of the gravity center GC of the module 40 is substantially coincident with that of the gravity center of the link 2, and for instance, is located substantially in the center of the pillar portion 8 of the link 2 with respect to the orthogonal direction V. As viewed in the chain width direction W, the position of the gravity center GC of the module 40 is varied depending upon the number of links 2 included in the module 40 (the number of links 2 of the link row 52). However, the variation amount is so small that the position of the gravity center GC as viewed in the chain width direction W may be considered substantially fixed irrespective of the number of links 2 included in the module 40.

With respect to the orthogonal direction V, the contact part T1 in the straight area is arranged within a range of 20% of the overall length S of the module 40 from the gravity center GC of the module 40 toward the chain-inside or the chain-outside. The overall length S of the module 40 with respect to the orthogonal direction V means a distance between a chain-inside end and a chain-outside end of the module 40 with respect to the orthogonal direction V. More specifically, the overall length S means a distance between a chain-inside end and a chain-outside end of the link 2 with respect to the orthogonal direction v.

If the contact part T1 is arranged beyond the above range with respect to the orthogonal direction V, an arm length (distance between the contact part T1 and the gravity center GC of the module 40 with respect to the orthogonal direction V) of a moment occurring within the chain in the straight area under a tensioned state is so great that the moment is increased in value. Hence, stress occurring in the link 2 is locally increased at the press-fitted portion 28 of the front through-hole 9. Therefore, the range of the contact part T1 is set as described above.

According to the embodiment, the position of the contact part T1 with respect to the orthogonal direction V is aligned with the position of the gravity center GC of the module 40 with respect to the orthogonal direction V. In the straight area, the individual contact parts T1 (adjoining contact parts T1 in the chain advancing direction X) are aligned with one another with respect to the orthogonal direction V. Referring to FIG.4, the respective pair of adjoining links 2 of the chain 1 in the continuously variable transmission having the aforementioned schematic configuration (only one link 2 is shown in FIG.4) pull each other via the corresponding connection member 200 so that the chain 1 is tensioned.

When the straight area is viewed in the chain width direction W, the first pin 3 and the counterpart second pin 4 are pressed each other along the chain advancing direction X at the contact part T1 as a working point. These first and second pins 3, 4 are received by the corresponding circumferential edges 27, 32 of the link 2, respectively. According to the embodiment as described above, the first pin is loose-fitted in the front through-hole 9 of each link 2 and the second pin 4 is fixedly press-inserted therethrough, whereas the first pin 3 is fixedly press-inserted through the rear through-hole 10 of each link 2 and the second pin 4 is loose-fitted therein.

When the respective end faces 17 of the first pins 3 contact with the corresponding sheave surfaces 62a, 63a, 72a, 73a of the pulleys 60, 70 to transmit power, the counterpart second pins 4 make rolling contact and/or sliding contact with the first pins 3, whereby the flexure between the links 2 is possible. At this time, the paired first and second pins 3, 4 have so much rolling contact component that sliding contact component is very little. As a result, the respective end faces 17 of the first pins 3 may be substantially inhibited from rotating relative to the corresponding sheave surfaces 62a, 63a, 72a, 73a of the pulleys 60, 70. Hence, friction loss between the first pins 3 and the respective pulleys 60, 70 may be reduced so that high power transmission efficiency may be achieved.

Further, the involute curve INV as the moving locus of the contact part T includes the change-rate increasing area. Therefore, the first pins 3 and the corresponding links 2 may be prevented from swinging in a radial direction of the corresponding pulleys 60, 70 before or after the first pins 3 are engaged with the corresponding pulleys 60, 70. This obviates the occurrence of minute vibrations similar to string vibrations in the chain 1, whereby the noise may be reduced.

The gravity center GC of the module 40 and the contact part T1 in the straight area are closely adjacent with respect to the orthogonal direction V. Therefore, the unwanted moment (load) may be prevented from occurring within the straight area when the chain 1 is tensioned as wound about the pulleys 60, 70.

Thus, the chain 1 may be improved in practical durability. Since the occurrence of the unwanted moment is restrained, the chain 1 may be reduced in inertia at transition from the straight area to the flex area. As a result, the vibrations of the chain 1 may be suppressed so that the noises may be even further reduced.

As viewed in the chain width direction W, the moving locus of the contact part T based on the first pin 3 forms the involute curve INV, whereby the first pins 3 and the corresponding links 2 may be favorably preventing from swinging in the radial direction of the pulleys 60, 70 before or after the first pins 3 are engaged with the pulleys 60, 70. As a result, the noises associated with the drive of the chain 1 may be even further reduced.

Further, the thickness D2 of the second pin 4 with respect to the chain advancing direction X is smaller than the thickness D1 of the first pin 3 with respect to the chain advancing direction X. Thus, the chain 1 may be downsized by way of the sliming of the second pin 4.

It is noted here that a contact area between the second pin 4 and the circumferential edges 27, 32 of the corresponding link 2 is decreased by reducing the thickness D2 of the second pin 4. Hence, pressure (surface pressure) exerted on the link 2 from the second pin 4, or particularly the pressure exerted on the press-fitted portions 28, 33 of the circumferential edges 27, 32 of the link 2 is increased. However, the load on the link 2 is reduced by suppressing the occurrence of the unwanted moment. Therefore, the thickness D2 of the second pin 4 may be adequately reduced without impairing the practical durability.

In this manner, the continuously variable transmission 100 may be realized which is excellent in the power transmission efficiency, low noise performance and practical durability, and is compact.

In the embodiment, the moving locus of the contact part T based on the first pin 3, as viewed in the chain width direction W, may be defined with a curve other than the involute curve INV. For instance, the cross-sectional profile of the curved portion 37 may be defined with a curve other than the curve coincident with the involute curve INV. An example of such a curve may include the following. The exemplary curve may include plural curvature radii and includes an area where the curvature radius is progressively increased from the chain-inside toward the chain-outside.

Further, the thickness D2 of the second pin 4 may be equal to the thickness D1 of the first pin 3 (D1=D2) or greater than the thickness D1 (D2>D1).

The kinds of the link rows included in the chain 1 are not limited to three kinds (the first to the third link rows 51 to 53). The chain 1 may also be formed using two kinds of link rows or four or more kinds of link rows.

In the straight area, the positions of the contact parts T1 is not necessarily aligned with respect to the orthogonal direction V.

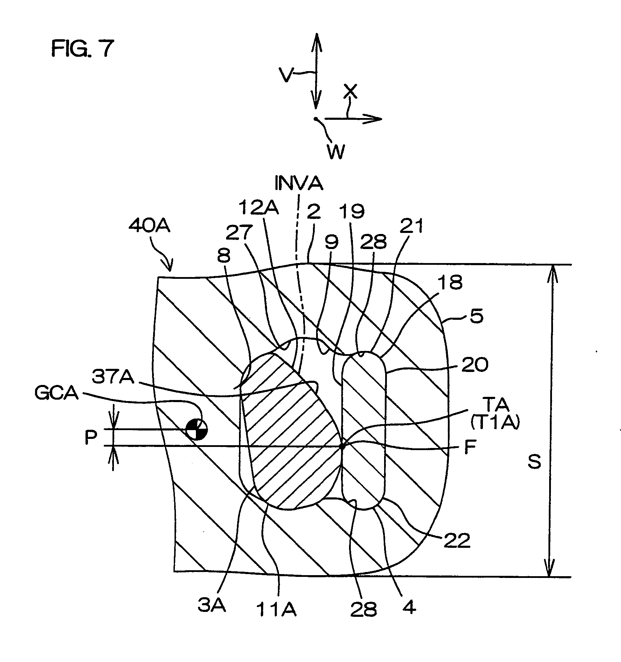

FIG. 7 is a sectional view showing an essential part of another embodiment of the invention. The following description is made on difference from the embodiment shown in FIG.1 to FIG.6, and the same structures are represented by the same reference characters, the description of which is omitted.

Referring to FIG.7, this embodiment primarily differs from the above embodiment in that a contact part T1A in the straight area is arranged offset from the gravity center GCA of a module 40A in the orthogonal direction V.

Specifically, the contact part T1A is shifted toward the chain-inside relative to the above gravity center GCA. With respect to the orthogonal direction V, the contact part T1A is located at place spaced from the gravity center GCA of the module 40A by, for example, 10% of the overall length S of the module 40A. With respect to the orthogonal direction V, the contact part T1A and the gravity center GCA are spaced apart by a distance P.

In this case, the length of a curved portion 37A on a circumferential surface 11A of a first pin 3A may be ensured longer as viewed in the chain width direction W. Thus, the maximum value of the displacement amount of a contact part TA associated with the flexure between the links 2 may be further increased. As a result, the allowable flexion angle φ max between the links 2 may be further increased.

The contact part T1A may be arranged at place shifted toward the chain-outside relative to the gravity center GCA of the module 40A.

The invention is not limited to the foregoing embodiments.

For instance, in the foregoing embodiments, the configuration of the front portion 12, 12A of the first pin 3, 3A and the configuration of the rear portion 19 of the counterpart second pin 4 may be interchanged. Furthermore, the second pin 4 may be adapted to engage with the pulleys 60, 70.

In addition, a member having a power transmission portion similar to the end face of the first pin may be disposed at respective places near the opposite end portions of the first pin. A power transmission block including the first pin and the members having the power transmission portions may be provided to define the first power transmission member.

The locations of the front through-hole 9 and the rear through-hole 10 of the link 2 may be interchanged. The pillar portion 8 between the front through-hole 9 and the rear through-hole 10 of the link 2 may also be formed with a communicating groove (slit). The slit may be greater than the height of the through-hole or may substantially be equal thereto. If the height of the through-hole is decreased, the link is increased in rigidity. If the height of the through-hole is increased, the link is increased in the amount of elastic deformation (flexibility) so that the stress produced in the link may be further reduced. The slit may be properly set according to load conditions.

The embodiment is not limited to the mode wherein both the groove width of the drive pulley 60 and the driven pulley 70 are varied, but either one of the groove widths may be variable while the other is fixed. Further, while the foregoing description is made on the mode wherein the groove width is continuously (steplessly) varied, the embodiment may also be applied to other power transmissions wherein the groove width is varied stepwise or the groove width is fixed (no transmission).

**Examples**

Examples 1, 2, 3 and Comparative Example 1 related to the above power transmission chain were fabricated. In Examples 1, 2, 3 and Comparative Example 1, the link height (the overall length of the module) was 6mm. In Example 1, the contact part between the first and second pins in the straight area was offset from the gravity center of the module toward the chain-inside by 17% (1mm) of the overall length of the module.

In Example 2, the contact part between the first and second pins in the straight area was offset from the gravity center of the module toward the chain-inside by 8.3% (0.5mm) of the overall length of the module. In Example 3, the contact part between the first and second pins in the straight area was offset from the gravity center of the module toward the chain-inside by 0% (0 mm) of the overall length of the module. That is, Example 3 has the above contact part and the gravity center aligned to each other with respect to the orthogonal direction.

In Comparative Example 1, the contact part between the first and second pins in the straight area was offset from the gravity center of the module toward the chain-inside by 23% (1.4mm) of the overall length of the module. Each of Examples 1, 2, 3 and Comparative Example 1 was subjected to an analytical test wherein the following equation was used for dynamically calculating an impact energy E (collision energy) caused by relative motion made by both the pin and the pulley at the moment that the pin and the pulley contact with each other.

$$E = (1/2) \times m \times (Vpulley - Vpin)^2$$

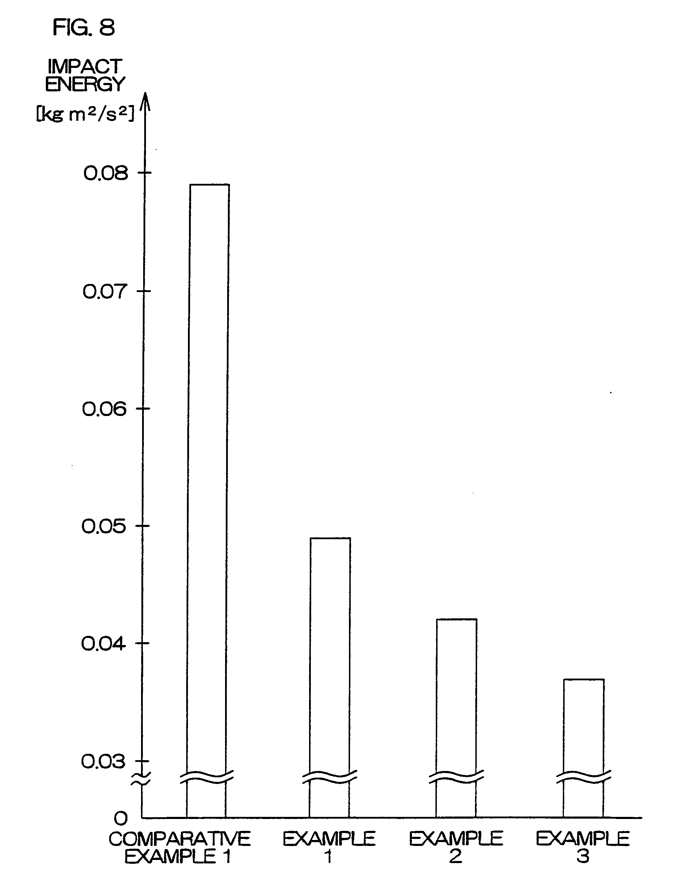

where Vpulley denotes the speed of the pulley at the moment of contact with the pin; Vpin denotes the speed of the pin at the moment of contact with the pulley; and m denotes the mass of the like module. The results of the analytical test are shown in FIG.8. In FIG.8, the impact energy in Comparative Example 1 exceeds $0.07 \mathrm{kg \cdot m^2/s^2}$. Therefore, Comparative Example 1 has a great load during drive, thereby producing much noise.

In each of Examples 1 to 3, on the other hand, the impact energy is below $0.05 \mathrm{kg \cdot m^2/s^2}$. Therefore, Examples 1 to 3 have small load during drive, thereby producing less noise. As the offset amount of the above contact part relative to the gravity center of the module is decreased, the impact energy is decreased accordingly.

As described above, Examples 1 to 3 proved excellent durability and low noise performance. Particularly, Example 3 proved excellent durability and low noise performance. It is thus demonstrated that Examples 1 to 3 are excellent in durability and low noise performance.

While the invention has been described in greater details with reference to the specific embodiments thereof, it is apparent that changes, modifications and equivalents thereof will occur to those skilled in the art who have understood the above contents. The scope of the present invention, therefore, is defined by the appended claims and their equivalents. The present application is in correspondence to Japanese Patent Application No.2005-191937 filed with Japanese Patent Office on June 30, 2005, and the whole disclosure thereof is incorporated herein by reference.

**Claims**

1.  A power transmission chain comprising:

    a plurality of link rows, each including a plurality of links arranged in a chain width direction perpendicular to a chain advancing direction, and arranged in the chain advancing direction; and
    a plurality of connection members for flexibly connecting corresponding links of the link rows,
    the connection members each including first and second power transmission members in paired relation,
    the first power transmission members each including a pair of end portions, each of which includes a power transmission portion for engaging with a pulley,
    each link including first and second through-holes arranged in the chain advancing direction,

    wherein a corresponding first power transmission member is fitted in one of the first and second through-holes of each link so as to be restrained from relative movement, whereas a corresponding second power transmission member is fitted in the other through-hole so as to be restrained from relative movement;

the first and second power transmission members in paired relation each have confronting portions opposing each other, and the confronting portions in opposing relation are in contact with each other at a contact part displaced in conjunction with flexure between the links in a contact state including at least one of rolling contact and sliding contact, a moving locus of the contact part associated with the flexure between the links defines a prescribed curve, the prescribed curve includes a change-rate increasing area where a change rate of displacement amount of the contact part on the prescribed curve is increased according to an increase of flexion angle between the links, a module as a unit element of the power transmission chain is formed using the respective links of one link row, and corresponding first and second power transmission members restrained from moving relative to the individual links,

positions of the contact part in a straight area and of a gravity center of the module are spaced apart by a predetermined distance with respect to an orthogonal direction perpendicular to both the chain advancing direction and the chain width direction; and

the predetermined distance is not more than 20% of overall length of the module with respect to the orthogonal direction.

2.  A power transmission chain according to Claim 1, wherein the prescribed curve includes an involute curve.

3.  A power transmission chain according to Claim 1, wherein the contact part in the straight area is disposed in a direction inwardly of flexure relative to the gravity center of the module when the chain is flexed.

4.  A power transmission chain according to Claim 1, wherein a thickness of the second power transmission member with respect to the chain advancing direction is smaller than that of the first power transmission member with respect to the chain advancing direction.

5.  A power transmission apparatus comprising first and second pulleys each including a pair of conical sheave surfaces in opposing relation, wherein power is transmitted between the pair of pulleys via the power transmission chain according to any one of Claims 1 to 4.

FIG. 1

EP 1 900 966 A1

FIG. 2

FIG. 3

FIG. 4

FIG. 5

FIG. 6

FIG. 7

FIG. 8

IMPACT
ENERGY

$[kg\,m^2/s^2]$

0.08

0.07

0.06

0.05

0.04

0.03

0

COMPARATIVE
EXAMPLE 1

EXAMPLE
1

EXAMPLE
2

EXAMPLE
3

<table>
<tr><td colspan="2"><strong>INTERNATIONAL SEARCH REPORT</strong></td><td colspan="2">International application No.<br>PCT/JP2006/313079</td></tr>
</table>

**A. CLASSIFICATION OF SUBJECT MATTER**
*F16G5/18(2006.01)i, F16H9/24(2006.01)i*

According to International Patent Classification (IPC) or to both national classification and IPC

**B. FIELDS SEARCHED**

Minimum documentation searched (classification system followed by classification symbols)
F16G5/18, F16H9/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 08-312725 A (Gear Chain Industrial B.V.),<br>26 November, 1996 (26.11.96),<br>Full text; all drawings<br>& US 5728021 A      & EP 741255 A1<br>& DE 69600141 C2      & NL 1000294 C | 1-5 |
| E,X | JP 2006-226452 A (JTEKT Corp.),<br>31 August, 2006 (31.08.06),<br>Full text; all drawings<br>(Family: none) | 1-5 |
| E,X | JP 2006-226405 A (JTEKT Corp.),<br>31 August, 2006 (31.08.06),<br>Full text; all drawings<br>(Family: none) | 1-5 |

☐ Further documents are listed in the continuation of Box C.      ☐ See patent family annex.

| | |
|---|---|
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>27 September, 2006 (27.09.06) | Date of mailing of the international search report<br>10 October, 2006 (10.10.06) |
| Name and mailing address of the ISA/<br>Japanese Patent Office | Authorized officer |
| Facsimile No. | Telephone No. |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8312725 A

- JP 2005191937 A